# EUROPÄISCHE PATENTSCHRIFT

(11) **EP 0 566 828 B1**
(45) Veröffentlichungstag und Bekanntmachung des Hinweises auf die Patenterteilung: **19.03.1997**
(21) Anmeldenummer: 93101483.1
(22) Anmeldetag: 30.01.1993
(51) Int. Cl.: G01B 5/00

(54) **Temperaturkompensierte Längenmesseinrichtung**
Length measuring device with temperature compensation
Dispositif de mesure de longueur à compensation de température

(30) Priorität: 18.04.1992 DE 4212970
(43) Veröffentlichungstag der Anmeldung: 27.10.1993
(73) Patentinhaber: Dr. Johannes Heidenhain GmbH, D-83292 Traunreut (DE)
(72) Erfinder: Nelle, Günther, Dr.-Ing., W-8221 Bergen (DE)

(56) Entgegenhaltungen:
- EP-A- 0 097 771
- DE-A- 3 243 966
- DE-C- 3 106 701
- DE-U- 8 315 835

## Beschreibung

Die Erfindung betrifft eine Längenmeßeinrichtung gemäß dem Oberbegriff des Anspruchs 1.

Eine derartige Längenmeßeinrichtung wird insbesondere bei Bearbeitungsmaschinen zur Messung der Relativlage eines Werkzeugs bezüglich eines zu beitenden Werkstücks eingesetzt.

Bei an Bearbeitungsmaschinen eingesetzten Längenmeßeinrichtungen treten Meßungenauigkeiten durch Teilungsfehler, Maschinenfehler und durch temperaturbedingte Meßfehler auf.

Die Kompensation von solchen temperaturbedingten Fehlern ist erforderlich, da in Räumen mit Bearbeitungsmaschinen im allgemeinen keine konstante Temperatur herrscht; ebenso ändern sich die Temperaturen der meisten Bearbeitungsmaschinen während der Bearbeitungsdauer ständig. Da aus Kostengründen in den seltensten Fällen der Teilungsträger mit der Teilung, der Trägerkörper für den Teilungsträger und das zu messende Objekt in Form des zugehörigen Maschinenteils aus Materialien mit gleichen thermischen Ausdehungskoeffizienten bestehen, unterliegen bei diesen unvermeidlichen Temperaturänderungen der Teilungsträger, der Trägerkörper und das Maschinenteil unterschiedlichen thermischen Längenänderungen, so daß Meßungenauigkeiten bei der Bearbeitung eines Werkstücks auftreten können, die bei den heutigen Anforderungen an die Bearbeitungsgenauigkeit von Werkstücken nicht mehr tragbar sind. Sehr häufig werden für den Teilungsträger Glas, für den Trägerkörper Aluminium und für das Maschinenteil Stahl oder Grauguß verwendet.

Aus der DE-OS 32 43 966 ist eine Längenmeßeinrichtung bekannt, bei der ein Teilungsträger mit einer Teilung mittels einer elastischen Klebeschicht mit einem Trägerkörper verbunden ist und somit in seiner Mitte einen festen Meßbezugspunkt aufweist, während er bei Temperaturänderungen zu beiden Seiten in Meßrichtung längsverschieblich ist. Der Trägerkörper ist seinerseits einmal an beiden Enden über jeweils ein Längenausgleichselement mit Befestigungselementen verbunden, die starr an einem zu messenden Maschinenteil befestigt sind, und zum anderen in seiner Mitte über ein zusätzliches Befestigungselement starr am Maschinenteil befestigt, so daß der Teilungsträger mit der Teilung bei Temperaturänderungen in seiner Mitte den festen Meßbezugspunkt bezüglich des Maschinenteils beibehält.

Der DE-PS 31 06 701 entnimmt man eine Einrichtung bei einer Längenmeßeinrichtung an einer Bearbeitungsmaschine, bei der zur Kompensation thermischer Längenänderungen eines Maschinenteils ein Dehnelement aus einem Material mit einem höheren thermischen Ausdehnungskoeffizienten als demjenigen des Maschinenteils mit seinem einen Ende am Maschinenteil und mit seinem anderen Ende an einem Teilungsträger mit einer Teilung befestigt ist, wobei die thermische Längenänderung des Dehnstabes gleich derjenigen des Maschinenteils ist, so daß die Längenänderung des Maschinenteils von der Meßeinrichtung erfaßt wird.

Die beiden vorgenannten Längenmeßeinrichtungen sind jedoch jeweils nur auf eine spezielle Temperaturkompensation bei einer Bearbeitungsmaschine eingerichtet und daher nicht für andersgeartete turprobleme an unterschiedlichen Bearbeitungsmaschinen geeignet.

Der Erfindung liegt die Aufgabe zugrunde, eine Längenmeßeinrichtung der genannten Gattung anzugeben, die bei allen auftretenden Temperaturproblemen an unterschiedlichen Bearbeitungsmaschinen einsetzbar ist.

Diese Aufgabe wird erfindungsgemäß durch die kennzeichnenden Merkmale des Anspruchs 1 gelöst.

Die mit der Erfindung erzielten Vorteile bestehen insbesondere darin, daß durch die vorgeschlagenen Maßnahmen die Längenmeßeinrichtung an alle in der Praxis vorkommenden Temperaturverhältnisse an den unterschiedlichen Bearbeitungsmaschinen bei unterschiedlichen Bearbeitungsvorgängen auf einfache Weise vom Anwender selbst angepaßt werden kann, so daß auf die verschiedenen Temperaturverhältnisse angepaßte spezielle Längenmeßeinrichtungen entbehrlich sind.

Vorteilhafte Weiterbildungen der Erfindung entnimmt man den abhängigen Ansprüchen.

Ein Ausführungsbeispiel der Erfindung wird anhand der Zeichnung näher erläutert.

Es zeigen
- Figur 1: eine gekapselte Längenmeßeinrichtung in einer Längsansicht und
- Figur 2: die Längenmeßeinrichtung nach Figur 1 in einem Querschnitt.

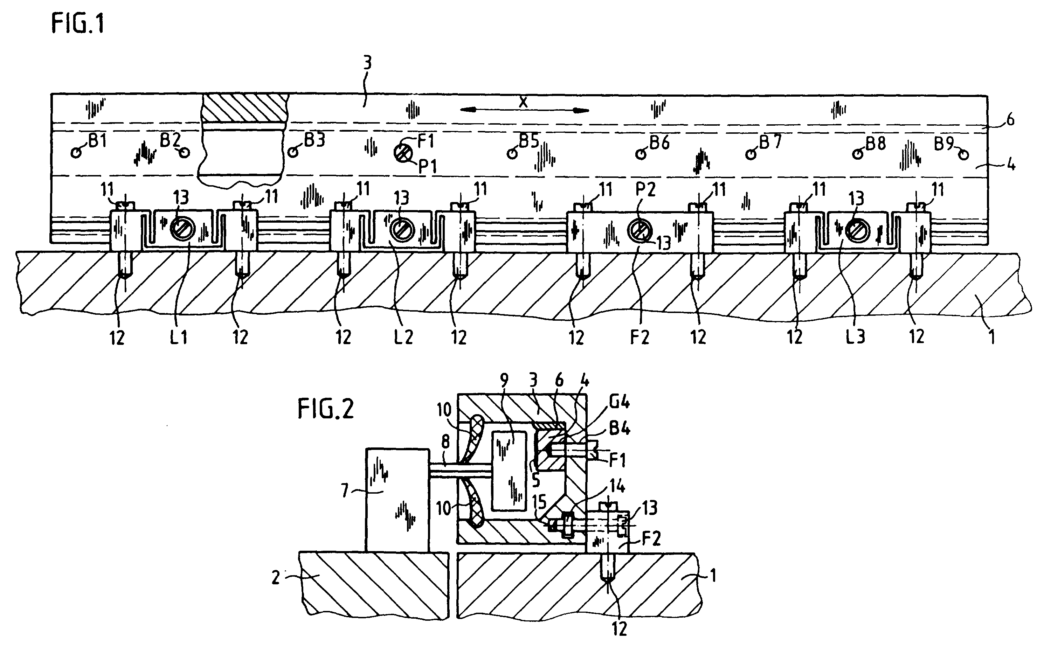

In den Figuren 1 und 2 ist eine vorzugsweise gekapselte Längenmeßeinrichtung zum Messen der Relativlage zweier Objekte 1, 2 in einer Längsansicht und in einem Querschnitt gezeigt. Im Inneren eines Trägerkörpers 3 in Form eines im Querschnitt U-förmigen Gehäuses ist ein Maßstabträger 4 mit einer Teilung 5 angeordnet, der einmal mittels einer elastischen Klebeschicht 6 mit dem Trägerkörper 3 in Meßrichtung X geringfügig längsverschieblich verbunden und zum anderen mittels eines ersten Fixierelements F1 an einem ersten Fixpunkt P1 an dem Trägerkörper 3 starr befestigt ist. Der Trägerkörper 3 ist seinerseits an dem ersten Objekt 1 in Form eines Schlittens einer nicht dargestellten tungsmaschine mittels eines zweiten Fixierelements F2 an einem zweiten Fixpunkt P2 starr befestigt und mittels dreier Längenausgleichselemente L1, L2, L3 in Meßrichtung X längsverschieblich verbunden.

Am zweiten Objekt 2 in Form des Bettes dieser Bearbeitungsmaschine ist ein Montagestück 7 in beliebiger Weise befestigt, das über einen doppelschwertförmigen Mitnehmer 8 mit einer Abtasteinheit 9 verbunden ist, die im Inneren des Trägerkörpers 3 die Teilung 5 auf dem Maßstabträgers 4 zur Gewinnung von Positionsmeßwerten für die Relativlage der beiden Objekte 1, 2 abtastet. Das Innere des Trägerkörpers 3 ist gegen Umwelteinflüsse mittels zweier dachförmig geneigter Dichtlippen 10 abgeschirmt, die am doppelschwertförmigen Mitnehmer 8 anliegen.

Zur Kompensation von temperaturbedingten Meßfehlern bei den gewonnenen Positionsmeßwerten aufgrund des jeweiligen Temperaturverhaltens der Bearbeitungsmaschine kann der erste Fixpunkt P1 zwischen dem stabträger 4 und dem Trägerkörper 3 verändert werden, indem eine Reihe von Bohrungen B1-B9 im Trägerkörper 3 und korrespondierende Gewindebohrungen G1-G9 im Maßstabträger 4 für das erste Fixierelement F1 in Form einer Schraube vorgesehen sind. Das erste Fixierelement F1 legt den Meßbezugspunkt der Teilung 5 des Maßstabträgers 4 bezüglich des Trägerkörpers 3 an dem jeweils gewählten ersten punkt P1 fest.

Zur Kompensation von temperaturbedingten Meßfehlern kann auch der zweite Fixpunkt P2 zwischen dem Trägerkörper 3 und dem ersten Objekt 1 verändert werden. Das zweite Fixierelement F2 besteht aus einem quaderförmigen Metallstück, das in den beiden Endbereichen mittels Schrauben 11 und Gewindebohrungen 12 im ersten Objekt starr befestigt ist. Des weiteren ist das erste Fixierelement F1 im Mittenbereich mittels einer Schraube 13 und einer Mutter 14 in einer Nut 15 des Trägerkörpers 3 starr mit dem Trägerkörper 3 verbunden. Mit den gleichen Elementen sind auch die Längenausgleichselemente L1-L3 mit dem ersten Objekt 1 und dem Trägerkörper 3 verbunden. Diese Längenausgleichselemente L1-L3 bestehen aus dem gleichen quaderförmigen Metallstück wie das zweite Fixierelement, besitzen jedoch im Unterschied zu diesem zwischen dem Mittenbereich und den beiden Endbereichen jeweils einen elastischen Bereich mit mäanderförmigen Einschnitten, so daß eine Längsverschieblichkeit des Trägerkörpers 3 bezüglich des ersten Objekts 1 in Meßrichtung möglich ist.

Die beiden Fixpunkte P1 und P2 können in einer Ebene senkrecht zur Meßrichtung X liegen, beispielsweise am Anfang oder am Ende bzw. in der Mitte des Meßbereichs. Die beiden Fixpunkte P1 und P2 können in Meßrichtung X auch spezielle gegenseitige Abstände aufweisen, so daß der Trägerkörper 3 die Funktion eines Dehnelements hat, damit die Längenänderung eines Maschinenteils von der Längenmeßeinrichtung erfaßt werden kann.

Die Teilung 5 kann auch auf einem zusätzlichen Teilungsträger (z.B. aus Glas) aufgebracht sein und dieser zusätzliche Teilungsträger z.B. über eine elastische oder feste Kleberschicht mit dem Maßstabträger 4 verbunden sein.

## Patentansprüche

1. Längenmeßeinrichtung zur Messung der Relativlage zweier Objekte, bei der die Teilung (5) eines mit dem einen Objekt (1) verbundenen Teilungsträgers (4) von einem mit dem anderen Objekt (2) verbundenen Abtasteinheit (9) abgetastet wird, wobei der Maßstabträger (4) mit der Teilung (5) an einem ersten Fixpunk (P1) innerhalb der Meßlänge fest und ansonsten längsverschieblich mit einem Trägerkörper (3) verbunden ist und der Trägerkörper (3) an einem zweiten Fixpunkt (P2) innerhalb der Meßlänge fest und ansonsten längsverschieblich mit dem einem Objekt (1) verbunden ist, dadurch gekennzeichnet, daß der erste Fixpunkt (P1) und/oder der zweite Fixpunkt (P2) innerhalb der Meßlänge veränderlich sind.

2. Meßeinrichtung nach Anspruch 1, dadurch gekennzeichnet, daß die beiden Fixpunkte (P1, P2) in diskreten Stufen veränderlich sind.

3. Meßeinrichtung nach Anspruch 1 dadurch gekennzeichnet, daß wenigstens einer der beiden Fixpunkte (P1,P2) kontinuierlich veränderlich ist.

4. Meßeinrichtung nach Anspruch 1, dadurch gekennzeichnet, daß auf dem Maßstabträger (4) der Teilungsträger mit der Teilung (5) befestigt ist.

## Claims

1. Length-measuring device for measuring the relative position of two objects, in which the division (5) of a division carrier (4) connected to one object (1) is scanned by a scanner unit (9) connected to the other object (2), the scale carrier (4) with the division (5) being connected rigidly and otherwise longitudinally movably with a carrier member (3) on a first fixed point (P1) within the measurement length, and the carrier member (3) being connected rigidly and otherwise longitudinally movably with one object (1) on a second fixed point (P2) within the measurement length,
characterised in that the first fixed point (P1) and/or the second fixed point (P2) are alterable within the measurement length.

2. Measuring device according to claim 1, characterised in that the two fixed points (P1, P2) are alterable in discrete steps.

3. Measuring device according to claim 1, characterised in that at least one of the two fixed points (P1, P2) is continuously alterable.

4. Measuring device according to claim 1, characterised in that the division carrier with the division (5) is secured on the scale carrier (4).

## Revendications

1. Dispositif de mesure de longueurs pour mesurer la position relative de deux objets, dans lequel la graduation (5) d'un support de graduation (4) lié à l'un des objets (1) est lue par une unité de lecture (9) liée à l'autre objet, le support de règle (4) portant la graduation (5) étant lié fermement à un premier point fixe (P1) à l'intérieur de la longueur de mesure et étant par ailleurs lié à un élément de support (3) avec possibilité de coulissement dans la direction longitudinale, l'élément de support (3) étant lié fermement à un second point fixe (P2) à l'intérieur de la longueur de mesure et étant par ailleurs lié avec possibilité de coulissement dans la direction longitudinale au premier objet (1), caractérisé par le fait que le premier point fixe (P1) et/ou le second point fixe (P2), à l'intérieur de la longueur de mesure, sont modifiables.

2. Dispositif de mesure selon la revendication 1, caractérisé par le fait que les deux points fixes (P1, P2) peuvent être modifiés par paliers discrets.

3. Dispositif de mesure selon la revendication 1, caractérisé par le fait qu'au moins l'un des deux points fixes (P1, P2) peut être modifié de manière progressive.

4. Dispositif de mesure selon la revendication 1, caractérisé par le fait que le support de graduation portant la graduation (5) est fixé sur le support de règle (4).
